(19) Europäisches Patentamt
European Patent Office
Office européen des brevets

(11) **EP 2 782 871 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(21) Anmeldenummer: **12805951.6**

(22) Anmeldetag: **23.11.2012**

(51) Int Cl.:
$C01F\ 7/38^{(2006.01)}$      $C01F\ 7/02^{(2006.01)}$
$C09K\ 3/14^{(2006.01)}$      $C04B\ 35/111^{(2006.01)}$
$B02C\ 23/08^{(2006.01)}$      $C04B\ 35/10^{(2006.01)}$
$C04B\ 35/622^{(2006.01)}$     $C04B\ 35/653^{(2006.01)}$
$C08K\ 3/22^{(2006.01)}$      $C08K\ 3/36^{(2006.01)}$

(86) Internationale Anmeldenummer:
**PCT/EP2012/073471**

(87) Internationale Veröffentlichungsnummer:
**WO 2013/076249 (30.05.2013 Gazette 2013/22)**

(54) **TITANOXIDHALTIGE ALUMINIUMOXIDPARTIKEL AUF BASIS VON IM ELEKTRISCHEN LICHTBOGENOFEN AUS KALZINIERTER TONERDE GESCHMOLZENEM KORUND SOWIE EIN VERFAHREN ZU DEREN HERSTELLUNG**

TITANIUM OXIDE-CONTAINING ALUMINIUM OXIDE PARTICLES BASED ON CORUNDUM MELTED IN AN ELECTRIC ARC FURNACE FROM CALCINED ALUMINA, AND A METHOD FOR THE PRODUCTION THEREOF

PARTICULES D'OXYDE D'ALUMINIUM CONTENANT DE L'OXYDE DE TITANE, À BASE DE CORINDON FONDU DANS UN FOUR À ARC ÉLECTRIQUE À PARTIR D'ALUMINE CALCINÉE ET PROCÉDÉ DE PRODUCTION DE CES PARTICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011   DE 102011087147**

(43) Veröffentlichungstag der Anmeldung:
**01.10.2014   Patentblatt 2014/40**

(73) Patentinhaber: **Center for Abrasives and Refractories Research & Development C.A.R.R.D. GmbH 9524 Villach (AT)**

(72) Erfinder:
• **SACHSE, Sebastian**
  **A-9500 Villach (AT)**
• **BÖRGER, Andreas**
  **9241 Goritschach (AT)**
• **KRAL, Alexander**
  **9500 Villach (AT)**

(74) Vertreter: **Haseltine Lake LLP Bürkleinstrasse 10 80538 München (DE)**

(56) Entgegenhaltungen:
**DE-A1- 2 723 036     DE-C1- 4 339 031**

EP 2 782 871 B1

**Beschreibung**

Die vorliegende Erfindung betrifft titanoxidhaltige Aluminiumoxidpartikel auf Basis von im elektrischen Lichtbogenofen aus kalzinierter Tonerde geschmolzenem Korund mit den Merkmalen des Oberbegriffs des Anspruchs 2 sowie ein Verfahren zu deren Herstellung.

Geschmolzene Korunde werden aufgrund ihrer hohen Härte und ihres hohen Schmelzpunktes als Schleifmittel und feuerfeste Materialien eingesetzt. Die Herstellung erfolgt durch Schmelzen der Rohstoffe im elektrischen Lichtbogenofen. Je nach eingesetzten Rohstoffen unterscheidet man zwischen den sogenannten Bauxit-Korunden, die ausgehend von Bauxit als Rohstoff mit Hilfe einer reduzierenden Schmelze im elektrischen Lichtbogenofen gewonnen werden, und den Tonerde-Korunden, bei denen auf chemischem Weg durch alkalischen Aufschluss von Bauxit hergestellte Tonerden als Rohstoffe eingesetzt werden.

Die natürlich vorkommenden Bauxite enthalten neben Aluminiumoxid im Wesentlichen Eisenoxid, Titanoxid und Siliziumoxid als Verunreinigungen, die bei der reduzierenden Schmelze im elektrischen Lichtbogenofen teilweise entfernt werden. Auf diese Weise werden die in der Schleifmittel und Feuerfestindustrie bekannten Normalkorunde mit einem $TiO_2$-Anteil von ca. 3 Gew.-% und die Halbedelkorunde mit einem $TiO_2$-Anteil von ca. 1.6 Gew.-% gewonnen.

Der Titanoxidgehalt beeinflusst die physikalischen Eigenschaften der Produkte. So zeichnen sich die titanoxidhaltigen Bauxitkorunde durch eine hohe Zähigkeit aus, die durch eine nachträgliche Temperaturbehandlung noch weiter gesteigert werden kann.

Die Analyse des Titanoxidgehaltes ist eine wichtige Methode zur Qualitätskontrolle während der Schmelze. Während der Produktion des Bauxit-Korundes reduziert der Kohlenstoff einen Teil des $TiO_2$ zu $Ti_2O_3$, das bis zu einem gewissen Grad in Aluminiumoxid löslich ist.

Beim Glühen in Gegenwart von Sauerstoff bildet sich eine charakteristische stahlblaue Farbe, die auf die Bildung von $Ti^{3+}/Ti^{4+}$-Phasen zurückzuführen ist. Die Ausbildung der blauen Farbe, die als Indikator für die Zähigkeit der Aluminiumoxidteilchen angesehen wird, hängt stark von dem Anteil an in fester Form gelöstem Titanoxid ($Ti_2O_3$) ab.

Die zweite große Gruppe der Schmelzkorunde sind die sogenannten Edelkorunde, die im elektrischen Lichtbogenofen auf Basis von kalzinierter Tonerde hergestellt werden. Neben dem reinen Edelkorund Weiß sind auch mit Chromoxid dotierte Edelkorunde bekannt, die rosa bzw. dunkelrot gefärbt sind.

Der oben beschriebene Stand der Technik spiegelt sich in zahlreichen Veröffentlichungen wieder, von denen im Folgenden lediglich zwei ausgesuchte Beispiele genannt werden sollen.

So wird in der US 4,157,898 ein geschmolzenes Aluminiumoxidschleifkorn auf Basis von Tonerde beschrieben mit einem Gehalt von 0.42 Gew.-% bis 0.84 Gew.-% an reduziertem Titanoxid. Die DE 34 08 952 C2 beschreibt ein Verfahren zur Herstellung von Korund durch reduzierendes Schmelzen von Bauxit im elektrischen Lichtbogen, wobei Bauxit unter Zusatz von metallischem Aluminium reduzierend geschmolzen wird.

Auch wenn die Herstellung von Schmelzkorund im elektrischen Lichtbogenofen schon seit über 100 Jahren bekannt ist, werden auch heute immer noch Anstrengungen unternommen, Verfahren und Produkte weiter zu verbessern, wobei in der jüngeren Zeit häufig die Senkung der Herstellkosten, die wesentlich durch die Rohstoffkosten und Energiekosten geprägt werden, als Ziel im Vordergrund steht. DE2723036 beschreibt die Herstellung von Halbedelkorund ausgehend von aufgereinigter Tonerde und hochreinem Titandioxid, wobei die Ausgangsmischung in einem Kippofen aufgeschmolzen wird und die Schmelze in Formen gegossen wird, um eine schnelle Abkühlrate zu erreichen. Angesichts steigender Bauxitpreise wurde so versucht, Bauxit als Rohstoff für die Herstellung von Halbedelkorund durch kalzinierte Tonerde zu ersetzen, was bisher aufgrund der deutlichen Preisunterschiede zwischen Bauxit und Tonerde als ökonomisch nicht sehr sinnvoll angesehen wurde, da der Fachmann überdies auch nicht erwarten konnte, dass durch den Austausch der Rohstoffe bei im Wesentlichen gleichbleibender chemischer Zusammensetzung signifikante Qualitätsunterschiede auftreten würden.

Überraschenderweise wurde nun gefunden, dass es durch den Ersatz von Bauxit durch kalzinierte Tonerde gelingt, geschmolzene titanoxidhaltige Aluminiumoxidpartikel herzustellen, die Eigenschaften aufweisen, durch die sie sich von einem konventionellen Halbedelkorund auf Bauxitbasis unterscheiden und die für bestimmte Anwendungen deutliche technische Vorteile mit sich bringen.

Im Folgenden wird die vorliegende Erfindung anhand von Ausführungsbeispielen erläutert.

**Beispiel 1 (Herstellung von Halbedelkorund)**

Die Herstellung der im Folgenden für die Vergleichsuntersuchungen eingesetzten Halbedelkorunde erfolgte nach einer Standardrezeptur gemäß dem Stand der Technik, die bewusst den späteren Anforderungen an eine Produktion angepasst wurde, so dass auch Rückläufe und Abfälle aus Vorproduktionen eingesetzt wurden. Für das auf Tonerde basierende Produkt FR (al) wurde anstelle des beim Standard üblichen Bauxits eine reine Tonerde mit Fe-, Ti- und Si-haltigen Zuschlägen eingesetzt, um die chemische Zusammensetzung eines Halbedelkorundes einzustellen.

Die auf Basis dieser Rezeptur im Schmelzprozess erhaltenen Halbedelkorunde mit der Bezeichnung FR (bx) und FR (al) hatten die in der Tabelle 1 zusammengefasste chemische Zusammensetzung:

Tabelle 2

| | FR (bx) | | | FR (al) | | |
|---|---|---|---|---|---|---|
| | | 1100°C | 1300°C | | 1100°C | 1300°C |
| $Fe_2O_3$ | 0.61 | 0.18 | 0.20 | 0.12 | 0.09 | 0.10 |
| $SiO_2$ | 0.85 | 0.63 | 0.54 | 0.34 | 0.35 | 0.29 |
| $TiO_2$ | 1.77 | 1.68 | 1.63 | 1.60 | 1.49 | 1.51 |
| $ZrO_2$ | 0.14 | 0.15 | 0.14 | 0.05 | 0.04 | 0.04 |
| $Na_2O$ | 0.04 | 0.03 | 0.03 | 0.11 | 0.11 | 0.08 |
| $Al_2O_3$ | 96.45 | 97.19 | 97.34 | 97.69 | 97.82 | 97.88 |
| Rest | 0.14 | 0.14 | 0.12 | 0.09 | 0.10 | 0.10 |
| | | | | | | |
| Summe | 100.00 | 100.00 | 100.00 | 100.00 | 100.00 | 100.00 |

Je nach Verwendungszweck werden die zur Körnung aufbereiteten Halbedelkorunde einer zusätzlichen thermischen Nachbehandlung bei 1100°C oder 1300°C unterzogen. Die entsprechenden nachbehandelten Produkte wurden ebenfalls chemisch analysiert und sind in der obigen Tabelle aufgeführt. In der obigen Tabelle ist zu erkennen, dass insbesondere beim $SiO_2$-, $Fe_2O_3$-, $ZrO_2$- und $Na_2O$-Gehalt signifikante Unterschiede zwischen den beiden unterschiedlichen Halbedelkorundsorten FR (al) und FR (bx) auftreten.

Die so erhaltenen titanoxidhaltigen Aluminiumoxidpartikel auf Basis von Tonerde zeichnen sich dadurch aus, dass das Verhältnis der Summe der Gewichtsanteile an $Fe_2O_3$, $SiO_2$ und $ZrO_2$ zu dem Gewichtsanteil an $Na_2O$ < 10 beträgt.

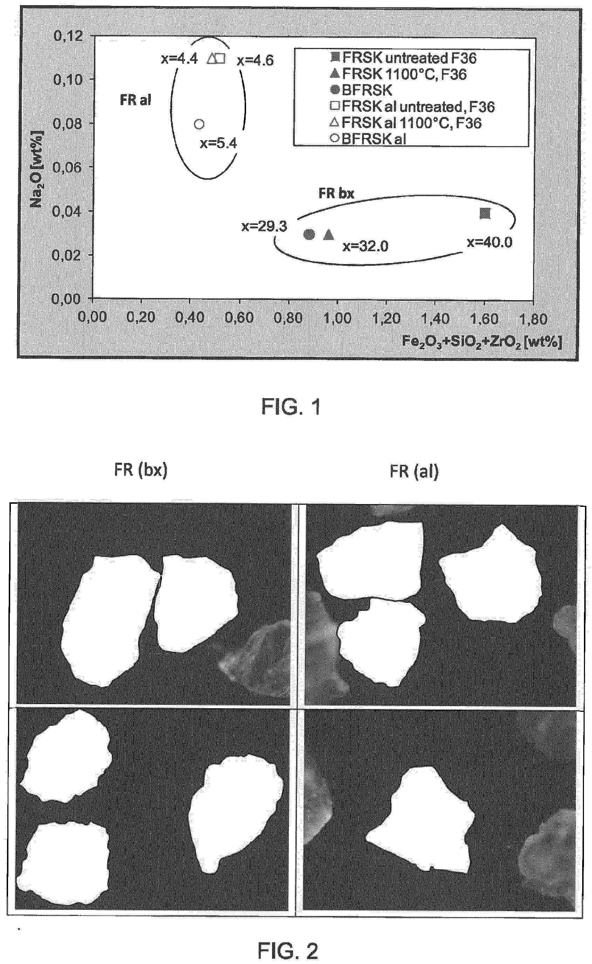

In dem als Figur 1 beigefügten Diagramm sind diese Zusammenhänge bzw. charakteristischen Unterschiede in der chemischen Analyse grafisch dargestellt, wobei zu erkennen ist, dass beim Verhältnis "x" der Summe der Gewichtsanteile an $Fe_2O_3$, $SiO_2$ und $ZrO_2$ zu dem Gewichtsanteil an $Na_2O$ signifikante Unterschiede zwischen den erfindungsgemäßen aus Tonerde gewonnenen Aluminiumoxidpartikeln FR (al) und den konventionellen Aluminiumoxidpartikeln auf Bauxitbasis FR (bx) bestehen, wobei sich die erhaltenen Zahlenwerte nahezu um den Faktor 10 unterscheiden. Die typischen Bereiche sind für die jeweiligen Aluminiumoxidpartikel mit einer Umrandung gekennzeichnet.

Die Schmelzversuche hatten das primäre Ziel, die Rohstoffe für die Herstellung eines auf dem Markt eingeführten Standards zu ersetzen. Somit wurde eine chemische Zusammensetzung angestrebt, die der ursprünglichen Produktspezifikation entspricht. Allerdings kommt es aufgrund der veränderten Rohstoffe zu geringfügigen Veränderungen bei den Verunreinigungen bzw. den Begleitstoffen.

Die qualitativen Untersuchungen der so gewonnenen Aluminiumoxidpartikel haben zunächst ergeben, dass das "Blaubrennen" des Halbedelkorunds auf Tonerdebasis erleichtert wird, was möglicherweise auf den rohstoffbedingten verringerten Anteil an Zirkonoxid im Endprodukt zurückzuführen ist. So sind im konventionellen Halbedelkorund üblicherweise Zirkonoxidanteile von ca. 0.15 Gew.-% zu finden, was auf $ZrO_2$-Verunreinigungen im Bauxit zurückzuführen ist. Durch den Wechsel des Rohstoffes und den Einsatz von kalzinierter Tonerde gelingt es, den Anteil an Zirkonoxid im Endprodukt unter 0.1 Gew.-%, vorzugsweise unter 0.05 Gew.-% zu halten, was die oben beschriebenen Vorteile beim Blaubrennen des Halbedelkorundes mit sich bringt.

Vergleichende Schleiftests, die im Rahmen der Untersuchungen des Halbedelkorunds auf Tonerdebasis durchgeführt wurden, haben dann ergeben, dass für bestimmte Anwendungen außerordentliche hohe Leistungssteigerungen zu erkennen sind, die mit der geringfügig geänderten chemischen Zusammensetzung nur schwer zu erklären sind.

## Beispiel 2 (Schleiftest / Lamellenschleifscheiben)

Eingesetzt wurden Halbedelkorund-Schleifkörnungen mit der Korngröße P40 in Lamellenscheiben, wobei ein Standardmaterial auf Bauxitbasis mit der Bezeichnung BFRPL (bx) mit einem als Beispiel 1 bezeichneten Halbedelkorund auf Tonerdebasis BFRPL (al) verglichen wurde. Bearbeitet wurde eine Eisenplatte mit den Abmessungen 600 mm $\times$ 5 mm $\times$ 60 mm, wobei auf der Fläche 60 mm $\times$ 5 mm abgetragen wurde. Die Ergebnisse des Schleiftests sind in der folgenden Tabelle 2 zusammengefasst.

Tabelle 2

| Halbedelkorund | BFRPL (bx) | BFRPL (al) |
|---|---|---|
| Abtrag (g) | 490 g | 714 g |
| Standzeit (min) | 14.3 | 23.0 |
| Schnittgeschwindigkeit (U/min) | 34.2 | 31.0 |

Beim Halbedelkorund auf Tonerdebasis ist eine deutliche Leistungssteigerung (höherer Materialabtrag) aufgrund der höheren Standzeit zu erkennen, worunter die Schnittgeschwindigkeit nur geringfügig leidet.

**Beispiel 3 (Schleiftest / Trennscheiben)**

Aus Halbedelkorund in der Körnung P36 wurden kunstharzgebundene Trennscheiben mit einem Durchmesser von 180 mm gefertigt, mit denen Baustahl ST37 mit den Abmessungen 30.4 mm × 8.2 mm getrennt wurde. Dazu wurden nach jeweils 3 Vorschnitten 12 Schnitte mit einer Umdrehung von 8000 rpm bei einer Zustellung von 0.9 cm$^2$/sec durchgeführt. Die Ergebnisse sind in der folgenden Tabelle 3 zusammengefasst.

Tabelle 3

| Halbedelkorund | BFRPL (bx) | BFRPL (al) |
|---|---|---|
| G-Faktor (cm$^2$/cm$^2$) | 17.5 | 20.6 |

**Beispiel 4 [Bildanalyse ImageJ (Version 1.44 p)]**

Da die bei oben aufgeführten Schleiftests gefundenen Leistungsunterschiede mit der geringfügig unterschiedlichen chemischen Zusammensetzung nur schwer zu erklären waren, wurden weitergehende Vergleichsuntersuchungen zwischen Halbedelkorundpartikeln auf Bauxitbasis und solchen auf Tonerdebasis durchgeführt, die sich auf die Untersuchungen der Kornform konzentrierten. Dazu wurden im Produktionsbetrieb aufbereitete Körnungen der Korngröße F36, die auf exakt den gleichen Zerkleinerungsanlagen unter den gleichen Bedingungen aufbereitet wurden, eines Standardmaterials auf Bauxitbasis und eines Halbedelkorunds auf Aluminiumoxidbasis miteinander verglichen. Es wurden Abbildungen von Schüttungen der Körnungen F36 mit Hilfe eines Lichtmikroskops erstellt und anschließend mittels der Bildanalysesoftware ImageJ (Version 1.44 p) analysiert.

Bildanalyse ImageJ (Version 1.44p)

Die Parameter der Bildanalysesoftware sind wie folgt definiert:

Rundheit

C = Rundheit,
A = Flächeninhalt,
P = Umfangslänge

$$C = 4\pi \frac{A}{P^2}$$

Streckungsgrad (aspect ratio)

AR = Streckungsgrad,
d$_{max}$ = maximaler Durchmesser,
d$_{min}$ = minimaler Durchmesser

$$AR = \frac{d_{max}}{d_{min}}$$

Kompaktheit (Solidität)

S = Solidität,
A = reale Partikelfläche,
B = konvexe Partikelfläche

$$S = \frac{A}{A+B}$$

Tabelle 4

|  | Halbedelkorund FR (bx) (Bauxit) | Halbedelkorund FR(al) (Tonerde) |
|---|---|---|
|  | Mittelwert | Mittelwert |
| Rundheit | 0.512 | 0.488 |
| Streckungsgrad | 1.410 | 1.564 |
| Kompaktheit | 0.836 | 0.782 |

Während in Bezug auf die Rundheit und den Streckungsgrad nur geringfügige Unterschiede zwischen den beiden Halbedelkorundsorten zu erkennen sind, ist der Unterschied bei der Kompaktheit als signifikant anzusehen. Der Halbedelkorund auf Tonerdebasis weist eine deutlich geringere arithmetisch gemittelte Kompaktheit auf, was auf eine splittrige, scharfkantige Form hinweist, die möglicherweise Ursache für die verbesserten Schleifleistungen anzusehen ist.

Die Figur 2 zeigt nebeneinander jeweils Ausschnitte von vergrößerten lichtmikroskopischen Aufnahmen einer Körnung F36 von erfindungsgemäßen titanoxidhaltigen Aluminiumoxidpartikeln auf Tonerdebasis und konventionellen titanoxidhaltigen Aluminiumoxidpartikeln auf Bauxitbasis, wobei die Umrisse von typischen Körnern nachgezeichnet und weiß hervorgehoben wurden, um die Unterschiede zu verdeutlichen. Dabei ist zu erkennen, dass die titanoxidhaltigen Aluminiumoxidpartikel auf Tonerdebasis FR (al) mehr scharfe Kanten aufweisen und eckiger ausfallen als die titanoxidhaltigen Aluminiumoxidpartikel auf Bauxitbasis FR (bx) .

Die titanoxidhaltigen Aluminiumoxidpartikel weisen eine arithmetisch gemittelte Kompaktheit von < 0.8 auf, wobei das Maß für die Kompaktheit, die mit Hilfe einer Bildanalyse ermittelte und als das Verhältnis der realen Partikelfläche (A) zur Summe aus der realen Partikelfläche (A) und der konvexen Partikelfläche (B) definierte Solidität (S) ist. Die erfindungsgemäßen titanoxidhaltigen Aluminiumoxidpartikel zeichnen sich darüber hinaus dadurch aus, dass das Verhältnis der Summe der Gewichtsanteile an $Fe_2O_3$, $SiO_2$ und $ZrO_2$ zu dem Gewichtsanteil an $Na_2O$ < 10 beträgt.

Eine vorteilhafte Ausgestaltung sieht vor, dass die titanhaltigen Aluminiumoxidpartikel einen Anteil an $ZrO_2$ < 0.05 Gew.-% aufweisen.

Gegenstand der vorliegenden Erfindung ist auch ein Verfahren zur Herstellung von titanoxidhaltigen Aluminiumoxidpartikeln auf Basis von im elektrischen Lichtbogenofen aus kalzinierter Tonerde geschmolzenen Korund. Das Verfahren umfasst die Schritte des Schmelzens einer Mischung von $Al_2O_3$, $TiO_2$, $SiO_2$ und $Fe_2O_3$ enthaltenen Rohstoffen in Gegenwart von Eisenspänen und Kohle im elektrischen Lichtbogenofen, das Abkühlen der aufgeschmolzenen Mischung, um einen festen im Wesentlichen aus Korund bestehenden Block zu erhalten, und das Zerkleinern und Aufbereiten des zu erhaltenen Korundblockes zu definierten Partikelgrößenverteilungen. Dabei werden als Rohstoffe geringe Mengen an Verunreinigungen enthaltene Rohstoffe, ausgewählt aus der Gruppe bestehend aus kalzinierter Tonerde, Rutil, Ilmenit und Eisenerz, in solchen Mengen eingesetzt, dass titanoxidhaltige Aluminiumoxidpartikel mit der chemischen Zusammensetzung $Al_2O_3$ > 97.0 Gew.-%, $Fe_2O_3$ von 0.05 bis 0.2 Gew.-%, $SiO_2$ von 0.1 bis 0.5 Gew.-%, $TiO_2$ von 1.3 bis 1.8 Gew.-%, $ZrO_2$ von 0.02 bis 0.1 Gew.-%, $Na_2O$ von 0.05 bis 2.0 Gew.-% und Sonstige (CaO, MgO, $K_2O$) < 0.2 Gew.-% erhalten werden und das Verhältnis der Summe der Gewichtsanteile an $Fe_2O_3$, $SiO_2$ und $ZrO_2$ zu dem Gewichtsanteil an $Na_2 O$ < 10 beträgt.

Die Kompaktheit der so erhaltenen Aluminiumoxidpartikel ist im arithmetischen Mittel < 0.8, wobei das Maß für die Kompaktheit, die mit Hilfe einer Bildanalyse ermittelte und als Verhältnis der realen Partikelfläche (A) zur Summe aus der realen Partikelfläche (A) und der konvexen Partikelfläche (B) definierte Solidität (S) ist.

Verwendung finden die so erhaltenen titanoxidhaltigen Aluminiumoxidpartikel für die Herstellung von Schleifmitteln und/oder Feuerfestmaterialien.

**Patentansprüche**

1. Verfahren zur Herstellung von titanoxidhaltigen Aluminiumoxidpartikeln auf Basis von im elektrischen Lichtbogenofen aus Tonerde geschmolzenem Korund mit den Schritten:

    - Schmelzen einer Mischung von $Al_2O_3$, $TiO_2$, $SiO_2$ und $Fe_2O_3$ enthaltenden Rohstoffen in Gegenwart von Eisenspänen und Kohle im elektrischen Lichtbogenofen,
    - Abkühlen der aufgeschmolzenen Mischung, um einen festen im Wesentlichen aus Korund bestehenden Block zu erhalten, und
    - Zerkleinern und Aufbereiten des so erhaltenen Korundblockes zu definierten Partikelgrößenverteilungen,

    wobei als Rohstoffe geringe Mengen an Verunreinigungen enthaltende Rohstoffe, ausgewählt aus der Gruppe bestehend aus kalzinierter Tonerde, Rutil, Ilmenit und Eisenerz, in solchen Mengen eingesetzt werden, dass titanoxidhaltige Aluminiumoxidpartikel mit der chemischen Zusammensetzung

    - $Al_2O_3$ > 97.0 Gew.-%,
    - $Fe_2O_3$ 0.05 - 0.2 Gew.-%,
    - $SiO_2$ 0.1 - 0.5 Gew.-%,
    - $TiO_2$ 1.3 - 1.8 Gew.-%,
    - $ZrO_2$ 0.02 - 0.1 Gew.-%,
    - $Na_2O$ 0.05 - 2.0 Gew.-% und
    - Sonstige (CaO, MgO, $K_2O$) < 0.2 Gew.-%,

    und einer arithmetisch gemittelten Kompaktheit < 0.8 gebildet werden, wobei das Maß für die Kompaktheit die mit Hilfe einer Bildanalyse ermittelte und als Verhältnis der realen Partikelfläche (A) zur Summe aus der realen Partikelfläche (A) und der konvexen Partikelfläche (B) definierte Solidität (S) ist, und wobei das Verhältnis der Summe der Gewichtsanteile an $Fe_2O_3$, $SiO_2$ und $ZrO_2$ zu dem Gewichtsanteil an $Na_2O$ < 10 beträgt.

2. Titanoxidhaltige Aluminiumoxidpartikel auf Basis von im elektrischen Lichtbogenofen aus kalzinierter Tonerde geschmolzenem Korund, erhältlich nach einem Verfahren gemäß Anspruch 1.

3. Verwendung der Aluminiumoxidpartikel nach Anspruch 2 für die Herstellung von Schleifmitteln und/oder Feuerfestmaterialien.

**Claims**

1. A method for producing titanium oxide-containing aluminum oxide particles based on corundum melted in an electric arc furnace from alumina, comprising the steps:

    - melting a mixture of raw materials containing $Al_2O_3$, $TiO_2$, $SiO_2$ and $Fe_2O_3$ in the presence of iron shavings and carbon in an electric arc furnace,
    - cooling the melted mixture to obtain a solid block consisting essentially of corundum and
    - size reduction and preparation of the resulting corundum block to form defined particle size distributions,

    wherein small amounts of raw materials containing impurities, selected from the group consisting of calcined alumina, rutile, ilmenite and iron ore are used as raw materials in amount such that titanium oxide-containing aluminum oxide particles with the following chemical composition:

    - $Al_2O_3$ > 97.0 wt%,
    - $Fe_2O_3$ 0.05 - 0.2 wt%,
    - $SiO_2$ 0.1 - 0.5 wt%,
    - $TiO_2$ 1.3 - 1.8 wt%,
    - $ZrO_2$ 0.02 - 0.1 wt%
    - $Na_2O$ 0.05 - 2.0 wt% and
    - other (CaO, MgO, $K_2O$) < 0.2 wt%,

    and an arithmetically averaged compactness of < 0.8 are formed, wherein the measure of the compactness is the solidarity (S) which is determined with the help of an image analysis and is defined as the ratio of the real particle area (A) to the sum of the real particle area (A) and the convex particle area (B), and wherein the ratio of the sum of the amounts by weight of $Fe_2O_3$, $SiO_2$ and $ZrO_2$ to the amount by weight of $Na_2O$ is < 10.

**2.** A titanium oxide-containing aluminum oxide particles based on corundum melted from calcined alumina in an electric arc furnace, obtainable by a method according to claim 1.

**3.** Use of the aluminum oxide particles according to claim 2 for production of abrasive agents and/or flame retardant materials.

**Revendications**

**1.** Un procédé de fabrication de particules d'oxyde d'aluminium contenant de l'oxyde de titane, sur une base de corindon fondu à partir d'alumine dans un four à arc électrique, avec les étapes ci-dessous :

- fusion d'un mélange de matières premières contenant de l'$Al_2O_3$, du $TiO_2$, du $SiO_2$ et du $Fe_2O_3$ en présence de carbone et de limaille de fer dans un four à arc électrique
- refroidissement du mélange fondu pour obtenir un bloc solide constitué principalement de corindon, et
- broyage et traitement du bloc de corindon ainsi obtenu pour obtenir des distributions granulométriques définies,

dans lesquelles des matières premières contenant de petites quantités d'impuretés, choisies dans le groupe comprenant l'alumine calcinée, le rutile, l'ilménite et le minerai de fer, sont utilisées en de telles quantités que des particules d'oxyde d'aluminium contenant de l'oxyde de titane, avec la composition chimique suivante :

- $Al_2O_3$ > 97,0 % en poids,
- $Fe_2O_3$ 0,05 - 0,2 % en poids,
- $SiO_2$ 0,1 - 0,5 % en poids,
- $TiO_2$ 1,3 - 1,8 % en poids,
- $ZrO_2$ 0,02 - 0,1 % en poids,
- $Na_2O$ 0,05 - 2,0 % en poids et
- autres (CaO, MgO, $K_2O$) < 0,2 % en poids,

et une compacité moyenne arithmétique de < 0,8, sont formées, par lesquelles la mesure de la compacité est la solidité déterminée à l'aide d'une analyse d'image et définie comme un rapport de l'aire de surface réelle des particules (A) à la somme de l'aire de surface réelle des particules (A) et de l'aire de surface convexe (B), et par lesquelles le rapport de la somme des parties pondérales du $Fe_2O_3$, du $SiO_2$ et du $ZrO_2$ à la partie pondérale du $Na_2O$ est < 10.

**2.** Des particules d'oxyde d'aluminium contenant de l'oxyde de titane sur une base de corindon fondu à partir d'alumine calcinée dans un four à arc électrique, pouvant être obtenues au moyen du procédé selon la revendication 1.

**3.** L'application des particules d'oxyde d'aluminium selon la revendication 2 dans la fabrication d'abrasifs et / ou de réfractaires.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4157898 A
- DE 3408952 C2
- DE 2723036